(19) Europäisches Patentamt
European Patent Office
Office européen des brevets

(11) **EP 4 464 399 A1**

(12) **EUROPEAN PATENT APPLICATION**

(43) Date of publication:
**20.11.2024 Bulletin 2024/47**

(21) Application number: **23174385.7**

(22) Date of filing: **19.05.2023**

(51) International Patent Classification (IPC):
***B01D 53/14*** (2006.01)

(52) Cooperative Patent Classification (CPC):
**B01D 53/1475; B01D 53/1412; B01D 53/1481;**
B01D 2252/103; B01D 2252/1035; B01D 2258/01;
B01D 2259/4566

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Ecospray Technologies S.r.l.**
**27058 Voghera (IT)**
• **Relayr GmbH**
**80339 Munich (DE)**

(72) Inventors:
• **Di Cecio, Alberto**
**15033 Casale Monferrato AL (IT)**
• **Lossani, Filippo**
**27056 Cornale e Bastida PV (IT)**
• **Cheung, Martin**
**80686 Munich (DE)**
• **Zarelli, Federico**
**23554 Lubeck (DE)**
• **Pulicelli, Marcello**
**20068 Peschiera Borromeo MI (IT)**

(74) Representative: **Perani & Partners S.p.A.**
**Piazza Armando Diaz, 7
20123 Milano (IT)**

(54) **A SYSTEM FOR CONTROLLING A SCRUBBER**

(57) A system (1) for controlling a scrubber (22) of a ship (2), comprises an acquisition unit (31), for collecting sensor data, and a processing unit (32), in signal communication with the acquisition unit (31) and configured to calculate a gas corrective factor, and a water flow setpoint value as a function of the collected sensor data. The system (1) comprises a pump controller (33), in signal communication with the processing unit 32) and with the pump (23) and the pump controller (33) is configured to adjust the water flow of the pump (23), as a function of the setpoint value and the gas corrective factor. The system (1) comprises a database (41) in signal communication with the acquisition unit (31) and configured to receive and store the sensor data from the acquisition unit (31), and a fault detection unit (42) which stores a gas model and a water flow model, and it is configured to detect miscalibrations of the gas sensor (S2) and of the water flow sensor (S3). The system (1) comprises a geographical database (43) and a recommendation unit (44) which stores a recommendation model and which is in signal communication with the geographical database (43), with the fault detection unit (42) and with the pump controller (33) and it is configured to calculate a recommended water flow of the pump (23) as needed by the geographical requirements stored in the geo database. The pump controller (33) is configured to adjust the waterflow of the pump (23) as a function of the calculated recommended water flow value.

Fig. 1

**EP 4 464 399 A1**

**Description**

*Technical Field*

The present invention relates to a system for controlling a scrubber. Scrubber (e.g. chemical scrubbers, gas scrubbers) are devices for air pollution control that can be used to remove some particulates and/or gases from industrial exhaust streams. Said systems are adopted to monitor and control the exhaust gas scrubbers' onboard ships to ensure compliance with the sulphur oxides regulation.

*Description of the state of the art*

Systems for controlling scrubbers are known in the state of the art. Said systems are implemented on ships. Said ships comprise a ship engine, a scrubber and a pump. The scrubber is in fluid communication with the ship engine and the scrubber comprises an exhaust treating unit configured to treat exhaust of the ship engine, such as heavy metals and fumes before discharging exhaust gas in the environment. The ship comprises a pump in fluid communication with the scrubber to pump water in the scrubber to clean the scrubber. The ship also comprises different sensors, in order to monitor the functioning of the scrubber. In detail, the ship comprises an engine sensor, in order to measure the load of the ship engine, a gas sensor, in order to measure the amount of gas discharged in the environment, and a water flow sensor, in order to measure the water flow pumped in the scrubber. In the preferred embodiment, the gas sensor is configured to measure the percentage of $CO_2$ in the gas discharged in the environment. Also, in the preferred embodiment, the gas sensor is configured to measure the content in ppm of $SO_2$ in the gas discharged.

The systems known in the state of the art comprise an acquisition unit which collects sensor data from the sensors. In addition, the known systems comprise a processing unit which calculates a gas corrective factor as a function of the difference between the measured gas discharged in the environment and a target gas discharged value. Also, said processing unit calculates a water flow setpoint value as a function of the collected sensor data. The systems comprise a pump controller which adjusts the water flow which is pumped in the scrubber.

*State of the art problem*

In the systems of the state of the art, it is observed a fragility of sensing equipment. This means that if the gas sensor and the water flow sensor are not properly calibrated in use, then the processing unit calculates wrong values of the gas corrective factor and of the water flow setpoint. In this condition, the ship does not function at the optimum point.

It is also noted that in said systems, the target values are set manually, implying the possibility of human error.

In addition, the systems known in the art do not take into account the working conditions of the ship in use, such as sulfur content of the fuel, water alkalinity or hydraulic losses, that influence the calculation of the water flow set point.

SUMMARY OF THE INVENTION

A general object of the present invention is to provide a system for controlling a scrubber of a ship.

In the context of the present invention, the technical of the present invention is to propose a system for controlling a scrubber which overcomes the disadvantages of the state of the art.

The purpose of the present invention is to make a system which is able to autoregulate the scrubber even in case of malfunctioning of the sensing equipment.

Advantageously, the system is able to automatically detect any malfunctioning of the sensors.

Advantageously, the system is able to automatically correct the waterflow which is pumped to the scrubber, in order to meet a target value based on the applicable regional limits of the exhaust gas.

Moreover, the system is able to compute the correct waterflow using a machine learning model which is trained on collected historical data and tuned to better match the individual characteristics of the ship.

In addition, the system is able to compute the correct water flow to meet compliance in different working conditions.

BRIEF DESCRIPTION OF THE DRAWINGS

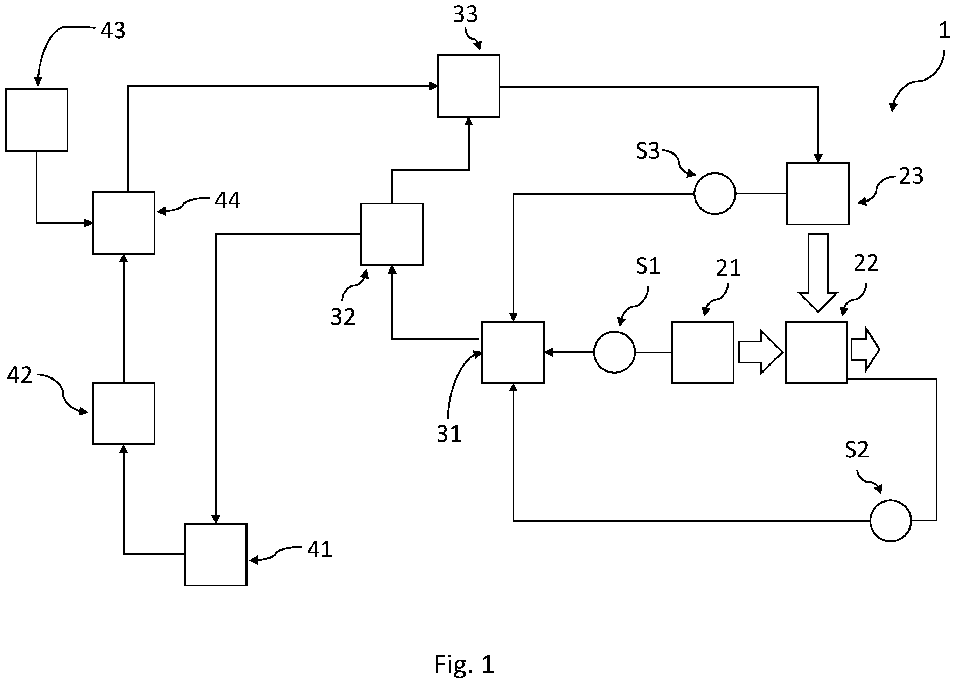

The present invention will now be described in more detail hereinafter with reference to the accompanying drawing, in which embodiment of the invention is shown. Figure 1 is a schematic view of the system for controlling a scrubber of a ship.

DETAILED DESCRIPTION

The present invention relates to a system 1 for controlling a scrubber 22 of a ship 2. A scrubber 22 allows to reduce the quantity of detrimental substances released in the environment, in particular in air, such as oils and/or heavy metals, due to combustion processes.

The ship 2 comprises a ship engine 21, configured to combust a fuel. During such combustion processes, byproducts are produced. The ship 2 comprises an engine sensor S1 configured to measure a load of the ship engine 21, i.e. the capacity of the engine 21 to produce power.

The ship 2 comprises a scrubber 22 in fluid communication with the ship engine 21. The scrubber 22 is configured to treat the exhaust produced by the ship engine 21.

The ship 2 also comprises an exhaust treating unit configured to treat the exhaust produced by the ship engine 21.

The ship 2 comprises a gas sensor S2 downstream of the scrubber 22. Preferably, the gas sensor S2 is downstream of the exhaust treating unit. The gas sensor S2 is configured to measure an amount of gas discharged in the environment. In the preferred embodiment, the gas sensor S2 is configured to measure the amount of $CO_2$ discharged in the environment, preferably in ppm. Preferably, the gas sensor S2 is configured to measure the amount of $SO_2$ discharged in the environment, preferably in ppm. Still preferably, the gas sensor S2 is configured to measure the $SO_2/CO_2$ ratio in the gas discharged in the environment.

The ship 2 comprises a pump 23 in fluid communication with the scrubber 22. The pump 23 is configured to pump water in the scrubber 22 in order to clean the scrubber 22. Preferably, the pump 23 is configured to pump seawater.

The ship 2 comprises a water flow sensor S3, configured to measure a pumped water flow in the scrubber 22.

The system 1 comprises an acquisition unit 31 configured to be connected with the engine sensor S 1, the gas sensor S2 and the water flow sensor S3. The acquisition unit 31 is configured to collect sensor data. Preferably, the acquisition unit 31 is configured to collect sensor data every five seconds. More preferably, the acquisition unit 31 is configured to collect data every 1.5 seconds. Said sensor data comprise data relating to the load of the ship engine 21, the amount of gas discharged in the environment and water flow pumped in the scrubber 22. In other words, the acquisition unit 31 is configured to collect data measured by the engine sensor S1, the gas sensor S2 and the water flow sensor S3.

The system 1 comprises a processing unit 32, in signal communication with the acquisition unit 31. Preferably, the processing unit 32 stores target gas discharge values. The target discharge values are predetermined according to applicable regulation based on sailing area. In the preferred embodiment, the target discharge values are referred to $SO_2/CO_2$ values.

The processing unit 32 is configured to calculate a gas corrective factor, as a function of the difference between the measured gas discharged in the environment and the target gas discharged value. Preferably, the processing unit 32 is configured to calculate the gas corrective factor as a function of the difference of the measured $SO_2/CO_2$ discharged in the environment and the target discharge values are referred to $SO_2/CO_2$ values.

The processing unit 32 is configured to calculate a water flow setpoint value as a function of the collected sensor data and of the gas corrective factor.

Preferably, the processing unit 32 is in signal communication with an electronic device of a user. The processing unit is configured to generate an alert signal whenever the measured amount of gas discharged in the environment, preferably the measured $SO_2/CO_2$, is not in the range of target gas discharge values.

Preferably, if the measured amount of gas discharged in the environment is lower than target gas discharge value, an over-scrubbing process is detected. The processing unit 32 is configured to generate an over-scrubbing alert. Preferably, the target discharge value is 10%. In other words, if the target gas discharge value is below 10%, an over-scrubbing alert is generated.

Preferably, if the measured amount of gas discharged in the environment is higher than target gas discharge value, an under-scrubbing process is detected. The processing unit 32 is configured to generate an under-scrubbing alert. Preferably, an under-scrubbing alert is generated if for any values above the target discharge values.

The system 1 comprises a pump controller 33, in signal communication with the processing unit 32 and with the pump 23. The pump controller 33 is configured to adjust the water flow of the pump 23, as a function of the setpoint value calculated by the processing unit 32.

In other words, the processing unit 32 is configured to calculate a corrected water flow setpoint, as a function of the sensor data and of the gas corrective factor, and, consequently, the pump controller 33 is configured to regulate the pump 23, according to the calculated water flow setpoint.

The system 1 comprises a database 41 in signal communication with the acquisition unit 31 and configured to receive and store the sensor data from the acquisition unit 31, for a period of time. Preferably, the database 41 is configured to store the sensor data up to a week with the primary objective of storing data with high variance data which represent various operating conditions of the system.

The system 1 comprises a fault detection unit 42 storing a gas model and a water flow model. The fault detection unit 42 is configured to interpolate the stored sensor data with the gas model and the waterflow model for detecting miscalibrations of the gas sensor S2 and of the water flow sensor S3, as a function of the interpolation. Preferably, the fault detection unit 42 is configured to interpolate the stored sensor data every seven days. Preferably, the fault detection unit 42 is configured to interpolate the stored sensor data if enough sensor data are collected. Preferably, the fault detection unit 42 is configured to interpolate the stored sensor data if at least 25000 sensor data are collected.

The gas model is a linear model comprising a plurality of verification coefficients. The linear model of the gas model is a function of the waterflow, of the engine load and of the amount of gas discharged. In particular, the linear model is a function of the water flow, of the engine load and of the amount of gas discharged in the environment. Preferably, the linear model is a function of the amount of $SO_2/CO_2$ discharged in the environment.

In the preferred embodiment, the equation of the linear model is the following:

$$Waterflow = A*EngineLoad + B*GasRatio + C$$

Preferably, the gas model comprises a first verification coefficient A, a second verification coefficient B and a third verification coefficient C.

The fault detection unit 42 is configured to store reference verification coefficients ranges. The fault detection unit 42 is configured to calculate verification coefficients A, B, C, as a function of the stored sensor data. The fault detection unit 42 is configured to compare the calculated verification coefficients A, B, C with the reference verification coefficients ranges. The fault detection unit 42 is configured to detect a malfunction of the gas sensor S2 whenever at least one verification coefficient is outside the reference verification coefficient range.

The stored reference verification coefficients ranges are based on the relationship between waterflow, of the engine load and of the $SO_2/CO_2$ discharged in the environment. The reference verification coefficients ranges are based on direct observation and known from scientific publications, such as in "The relationship between atmospheric pollutant emissions and fuel qualities of inland vessels in Jiangsu Province, China", Journal of the Air & Waste Management Association, Volume 69, 2019 by Cao and others.

In particular, according to the preferred embodiment, the verification coefficients range of the first verification coefficient A has to be a positive value. It is known in the state of the art that engine load is directly proportional to gas ratio.

According to the preferred embodiment, the verification coefficients range of the second verification coefficient B has to be a negative value. It is known in the state of the art that the water flow is inversely proportional to the gas ratio.

According to the preferred embodiment, the verification coefficients range of the third verification coefficient C has to be a positive value. In particular, the third verification coefficient C corresponds to the minimum waterflow which enables the scrubber 22 to operate correctly.

The fault detection unit 32 is configured to calculate the verification coefficients by interpolating the stored sensor data with the linear regression model.

If the calculated verification coefficients A, B, C do not fall within the corresponding coefficients range, then there is a malfunction of the gas sensor S2. In other words, if the first verification coefficient A is a negative value and/or if the second verification coefficient B is a positive value and/or the third verification coefficient C is a negative value or it is equal to zero, then there is a malfunction in the gas sensor S2.

Preferably, the first verification coefficient A, the second verification coefficient B and the third verification coefficient C are calculated every seven days.

Preferably, in order to verify the health of the gas sensor, an additional gas model is taken into account. The fault detection unit 42 is implemented with reference gas interval. In the preferred embodiment, the reference gas interval is referred to $CO_2$ limits. Preferably, if the ship engine 21 is a 2-stroke engine, the reference gas interval is comprised between 2.5% and 5%. Preferably, if the ship engine 21 is a 4-stroke engine, the reference gas interval is comprised between 3.5% and 6.5%.

In particular, stored data related to the gas sensor S2 are taken into account. Preferably, the fault detection unit 42 is configured to take into account the measured values of $CO_2$.

Preferably, the fault detection unit 42 is configured to calculate an average value over a period of time, preferably twelve hours, of the gas sensor data. The fault detection unit 42 is configured to compare the calculated average value with the reference gas interval. If the average value is above or below the respective reference gas interval, then there is a malfunction of the gas sensor S2. Preferably, the fault detection unit 42 is configured to send an alert to a user if the average value is above or below the reference gas interval.

It should be noted that the fault detection unit 42 is configured to detect a malfunction in the gas sensor S2 if the calculated average value is above or below the respective reference gas interval or if the verification coefficients A, B, C do not fall within the corresponding coefficients range.

The fault detection unit 42 is configured to store pump datapoints related to the pump speed and water flow. The fault detection unit 42 is configured to compare the water flow measured by the water flow sensor S3 with the stored pump datapoints. The fault detection unit 42 is configured to detect a malfunction of the waterflow sensor S3 whenever the pumped water flow does not match stored pump datapoint.

Preferably, the fault detection unit 42 stores a hydraulic system data related to a hydraulic circuit. Preferably, the fault detection unit 42 is configured to detect changes in the hydraulic circuits, such as obstructions and leakages, by comparing the pump speed with the measured water flow.

In a preferred embodiment, the fault detection unit 42 is configured to store a reference working range of the ship engine 21. Preferably, the fault detection unit 42 is configured to compare the data relating to the load of the ship engine 21 with the reference working range. Preferably, the reference working range is a range between 0 and 100%. The fault detection unit 42 is configured to detect a malfunction of the engine sensor S1 whenever the measured load of the ship engine 21 is outside the reference working range.

The system 1 comprises a geographical database 43 which comprises gas limit values as a function of geographical coordinates. Preferably, the gas limit values are SO2/CO2 values. In the preferred embodiment, the ship comprises a GPS, in signal communication with the geographical database 43, and which is configured to determine the current geographical coordinates of the ship at a given moment.

The system 1 comprises a recommendation unit 44, configured to calculate the water flow to be pumped in the scrubber 22. The recommendation unit 44 is in signal communication with the geographical database 43, with the fault detection unit 42 and with the pump controller 33. The recommendation unit 44 comprises a recommendation model configured to calculate a recommended water flow of the pump 23. As it will discuss below, the recommendation unit 44 is configured to calculate a recommended water flow of the pump 23 based on the recommendation model, as a function of the stored sensor data and gas limit values.

The recommendation unit 44 stores a cold start model, which is a linear model configured to calculate the water flow of the pump 23. The cold start model has a plurality of recommendation coefficients.

In the preferred embodiment, the equation of cold start model is the following:

$$\text{Waterflow} = \text{RatedPower} * [\text{D}*\text{EngineLoad} + \text{E}*\text{GasRatio} + \text{F}]$$

wherein D, E, F are the recommendation coefficients and RatedPower is a scaling factor, based on the ship engine 21 rated power.

Moreover, the cold start model is trained with sensor data obtained from working ships. Preferably, the cold start model is trained with sensor data obtained from working ships with the same ship engine 21 type, i.e., 2-strokes or 4-strokes. Preferably, the cold start model is trained with sensor data obtained from working ships with a different rated power.

Preferably, the recommendation unit 44 is configured to calculate a rough starting value of the recommendation coefficients D, E, F, using sensor data coming from ships already in use, in order to be able to compute a rough starting value of the water flow setpoint.

Advantageously, the cold start model provides a valid starting point for the calculation of the recommended water flow to be pumped to the scrubber 22, in case of failure of at least a sensor is detected.

The recommendation unit 44 stores a model tuner configured to tune the plurality of recommendation coefficients D, E, F of the cold start model to the ship 2 in use, as a function of the sensor data currently measured.

The recommendation model is the tuned cold start model. The recommendation model is configured to compute the recommended water flow as a function of the recommendation coefficients D, E, F and of the sensor data.

Advantageously, the recommendation unit 44 is able to calculate an accurate recommendation water flow value taking into account the gas limit values different geographical positions. In other words, with the data related to the engine power, the gas limit values and accurate recommendation coefficients, the recommendation unit 44 is configured to calculate an accurate recommendation water flow value.

Advantageously, the recommendation model is able to provide an accurate recommendation water flow value, in case of failure of one of the sensors S1, S2, S3.

The recommendation model, i.e. the tuned cold start model is able to provide an accurate recommended water flow corresponding to current sailing and ship conditions. Preferably, the cold start model is periodically tuned using recent sensor data related to present conditions. Advantageously, the recommendation model is able to provide the most accurate water flow value.

The recommendation unit 44 is configured to send the recommended water flow to the pump controller 33. The pump controller 33 is configured to adjust the waterflow of the pump 23.

## Claims

**1.** A system (1) for controlling a scrubber (22) of a ship (2), the ship (2) comprising a ship engine (21), an engine sensor (S1) configured to measure a load of the ship engine (21), a scrubber (22) in fluid communication with the ship engine (21) and configured to treat exhaust of the ship engine (21), a gas sensor (S2) downstream of the scrubber (22) and configured to measure an amount of gas discharged in the environment, a pump (23) in fluid communication with the scrubber (22) and configured to pump water in the scrubber (22), a water flow sensor (S3) configured to measure a pumped water flow,

the system (1) comprising:

- an acquisition unit (31), configured to be connected with the engine sensor (S1), the gas sensor (S2) and the water flow sensor (S3) for collecting sensor data, the sensor date comprising data relating to the load of the ship engine (21), the amount of gas discharged and the pumped water flow,
- a processing unit (32), in signal communication with the acquisition unit (31) and configured to calculate a gas corrective factor, as a function of the difference between the measured gas discharged and a target gas discharged value, and to calculate a water flow setpoint value as a function of the collected sensor data,
- a pump controller (33), in signal communication with the processing unit (32) and with the pump (23), the pump controller (33) being configured to adjust the water flow of the pump (23), as a function of the setpoint value and the gas corrective factor,

**characterized in that the system (1) comprises:**

- a database (41) in signal communication with the acquisition unit (31) and configured to receive and store the sensor data from the acquisition unit (31), for a period of time,
- a fault detection unit (42) storing a gas model and a waterflow model, the fault detection unit (42) being configured to interpolate the stored sensor data with the gas model and the waterflow model for detecting miscalibrations of the gas sensor (S2) and of the water flow sensor (S3), as a function of the interpolation,
- a geographical database (43) comprising gas limit values as a function of geographical coordinates,
- a recommendation unit (44) storing a recommendation model and in signal communication with the geographical database (43), with the fault detection unit (42) and with the pump controller (33), the recommendation unit being configured to calculate a recommended water flow of the pump (23) based on the recommendation model, as a function of the stored sensor data and gas limit values, the pump controller (33) being configured to adjust the waterflow of the pump (23) as a function of the calculated recommended water flow value.

2. A system (1) according to claim 1, wherein the gas model is a linear model comprising a plurality of verification coefficients, the fault detection unit (42) stores reference verification coefficients ranges, and is configured to

- calculate verification coefficients as a function of the stored sensor data,
- compare the calculated verification coefficients with the reference verification coefficients ranges,
- detect a malfunction of the gas sensor (S2) whenever at least one verification coefficient is outside the reference verification coefficient range.

3. A system (1) according to claim 1 or 2, wherein the fault detection unit (42) stores pump datapoints related to the pump speed and waterflow, and is configured to:

- compare measured waterflow of the waterflow sensor (S3) with the stored pump datapoints,
- detect a malfunction of the waterflow sensor (S3) whenever the pumped waterflow does not match stored pump datapoint.

4. A system (1) according to any claims from 1 to 3, wherein the recommendation unit (44):

- stores a cold start model, which is a linear model configured to calculate the waterflow of the pump, the cold start model having a plurality of recommendation coefficients, and being configured to be trained with sensor data obtained from working ships (2),
- stores a model tuner configured to tune the plurality of recommendation coefficients of the cold start model to the ship in use, as a function of the sensor data.

5. A system (1) according to claim 4, wherein the recommendation model is the tuned cold start model and wherein the recommendation model is configured to compute the waterflow value as a function of the recommendation coefficients and of the sensor data.

6. A ship (2) comprising:

- a ship engine (21),
- an engine sensor (S1) configured to measure a load of the ship engine (21),
- a scrubber (22) in fluid communication with the ship engine (21),
- a system (1) for controlling the scrubber (22) of the ship (2),
wherein the scrubber (22) comprises:

- an exhaust treating unit configured to treat exhaust of the ship engine (21),
- a gas sensor (S2) downstream of the scrubber (22) and configured to measure an amount of gas discharged in the environment,
- a pump (23) in fluid communication with the scrubber (22) and configured to pump water in the scrubber (22) to clean the scrubber (22),
- a water flow sensor (S3) configured to measure a pumped water flow,

wherein the system (1) comprises:

- an acquisition unit (31), configured to be connected with the engine sensor (S1), the gas sensor (S2) and the water flow sensor (S3) for collecting sensor data, the sensor date comprising data relating to the load of the ship engine (21), the amount of gas discharged and the pumped water flow,
- a processing unit (32), in signal communication with the acquisition unit (31) and configured to calculate a gas corrective factor, as a function of the difference between the measured gas discharged and a target gas discharged value, and to calculate a water flow setpoint value as a function of the collected sensor data,
- a pump controller (33), in signal communication with the processing unit (32) and with the pump (23), the pump controller (33) being configured to adjust the water flow of the pump (23), as a function of the setpoint value and the gas corrective factor,

**characterized in that the system (1) comprises:**

- a database (41) in signal communication with the acquisition unit (31) and configured to receive and store the sensor data from the acquisition unit (31), for a period of time,
- a fault detection unit (42) storing a gas model and a waterflow model, the fault detection unit (42) being configured to interpolate the stored sensor data with the gas model and the waterflow model for detecting miscalibrations of the gas sensor (S2) and of the water flow sensor (S3), as a function of the interpolation,
- a geographical database (43) comprising gas limit values as a function of geographical coordinates,
- a recommendation unit (44) storing a recommendation model and in signal communication with the geographical database (43), with the fault detection unit (42) and with the pump controller (33), the recommendation unit being configured to calculate a recommended water flow of the pump (23) based on the recommendation model, as a function of the stored sensor data and gas limit values, the pump controller (33) being configured to adjust the waterflow of the pump (23) as a function of the calculated recommended water flow value.

Fig. 1

EP 4 464 399 A1

Europäisches
Patentamt

European
Patent Office

Office européen
des brevets

**EUROPEAN SEARCH REPORT**

Application Number

EP 23 17 4385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/209720 A1 (KOMATSU TADASHI [JP] ET AL) 30 July 2015 (2015-07-30) * claims 1-5; figures 1, 4-11 * | 1-6 | INV. B01D53/14 |
| A | EP 3 315 739 A1 (YARA MARINE TECH AS [NO]) 2 May 2018 (2018-05-02) * claims 1-8; figure 1 * | 1-6 | |
| A | WO 2020/202633 A1 (MITSUBISHI HITACHI POWER SYS [JP]) 8 October 2020 (2020-10-08) * figure 1 * | 1-6 | |
| A | US 2017/001143 A1 (TOUYAMA HIROYUKI [JP]) 5 January 2017 (2017-01-05) * figures 1-7 * | 1-6 | |
| A | US 2019/126192 A1 (SHIBATA RYOSUKE [JP] ET AL) 2 May 2019 (2019-05-02) * paragraphs [0082] - [0084], [0120] - [0123]; claim 17 * | 1,6 | TECHNICAL FIELDS SEARCHED (IPC) |
| A | US 2017/113177 A1 (NAKAGAWA YOSUKE [JP] ET AL) 27 April 2017 (2017-04-27) * paragraph [0050] * | 1,6 | B01D |

The present search report has been drawn up for all claims

| Place of search | Date of completion of the search | Examiner |
|---|---|---|
| Munich | 10 November 2023 | de Biasio, Arnaldo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 4385

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2023

| Patent document cited in search report | | Publication date | Patent family member(s) | | Publication date |
|---|---|---|---|---|---|
| US 2015209720 | A1 | 30-07-2015 | CN | 104736225 A | 24-06-2015 |
| | | | DK | 2952243 T3 | 14-01-2019 |
| | | | EP | 2952243 A1 | 09-12-2015 |
| | | | JP | 5958563 B2 | 02-08-2016 |
| | | | JP | WO2014119513 A1 | 26-01-2017 |
| | | | KR | 20150110459 A | 02-10-2015 |
| | | | US | 2015209720 A1 | 30-07-2015 |
| | | | US | 2019083924 A1 | 21-03-2019 |
| | | | WO | 2014119513 A1 | 07-08-2014 |
| EP 3315739 | A1 | 02-05-2018 | AU | 2017349190 A1 | 07-03-2019 |
| | | | BR | 112019005635 A2 | 02-07-2019 |
| | | | CA | 3038431 A1 | 03-05-2018 |
| | | | CN | 109844272 A | 04-06-2019 |
| | | | DK | 3532712 T3 | 06-04-2021 |
| | | | EP | 3315739 A1 | 02-05-2018 |
| | | | EP | 3532712 A1 | 04-09-2019 |
| | | | JP | 7022122 B2 | 17-02-2022 |
| | | | JP | 2020501058 A | 16-01-2020 |
| | | | KR | 20190067789 A | 17-06-2019 |
| | | | RU | 2019107286 A | 30-11-2020 |
| | | | US | 2019323398 A1 | 24-10-2019 |
| | | | WO | 2018078075 A1 | 03-05-2018 |
| WO 2020202633 | A1 | 08-10-2020 | CN | 113613759 A | 05-11-2021 |
| | | | JP | 2020168596 A | 15-10-2020 |
| | | | KR | 20210126732 A | 20-10-2021 |
| | | | TW | 202037405 A | 16-10-2020 |
| | | | WO | 2020202633 A1 | 08-10-2020 |
| US 2017001143 | A1 | 05-01-2017 | CN | 106029206 A | 12-10-2016 |
| | | | EP | 3189883 A1 | 12-07-2017 |
| | | | JP | 6269844 B2 | 31-01-2018 |
| | | | JP | WO2016035487 A1 | 27-04-2017 |
| | | | KR | 20170044609 A | 25-04-2017 |
| | | | US | 2017001143 A1 | 05-01-2017 |
| | | | WO | 2016035487 A1 | 10-03-2016 |
| US 2019126192 | A1 | 02-05-2019 | AU | 2018217997 A1 | 16-05-2019 |
| | | | CN | 109718636 A | 07-05-2019 |
| | | | GB | 2567923 A | 01-05-2019 |
| | | | JP | 6913604 B2 | 04-08-2021 |
| | | | JP | 2019081121 A | 30-05-2019 |
| | | | US | 2019126192 A1 | 02-05-2019 |
| US 2017113177 | A1 | 27-04-2017 | AU | 2015286248 A1 | 15-12-2016 |

EPO FORM P0459

For more details about this annex : see Official Journal of the European Patent Office, No. 12/82

page 1 of 2

## ANNEX TO THE EUROPEAN SEARCH REPORT
### ON EUROPEAN PATENT APPLICATION NO.

EP 23 17 4385

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2023

| Patent document cited in search report | Publication date | Patent family member(s) | | Publication date |
|---|---|---|---|---|
| | | CA | 2950569 A1 | 14-01-2016 |
| | | EP | 3150270 A1 | 05-04-2017 |
| | | JP | 2016016393 A | 01-02-2016 |
| | | US | 2017113177 A1 | 27-04-2017 |
| | | WO | 2016006415 A1 | 14-01-2016 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **CAO.** The relationship between atmospheric pollutant emissions and fuel qualities of inland vessels in Jiangsu Province, China. *Journal of the Air & Waste Management Association,* 2019, vol. 69